# EUROPEAN PATENT SPECIFICATION

(11) **EP 3 774 248 B1**
(45) Date of publication and mention of the grant of the patent: **15.11.2023**
(21) Application number: 19721429.9
(22) Date of filing: 04.04.2019
(51) Int. Cl.: B28C 9/04, C02F 1/66, C02F 1/52, C02F 1/68, C04B 28/02, C04B 40/00

(54) **READY-MIX CONCRETE PRODUCTION UTILIZING CARBON CAPTURE AND RELATED SYSTEMS**
FERTIGBETONHERSTELLUNG UNTER VERWENDUNG VON KOHLENSTOFFBINDUNG UND VERWANDTE SYSTEME
PRODUCTION DE BÉTON PRÊT À L'EMPLOI UTILISANT UNE CAPTURE DE CARBONE ET SYSTÈMES ASSOCIÉS

(30) Priority: 04.04.2018 US 201862652679 P
(43) Date of publication of application: 17.02.2021
(73) Proprietor: Meedl68 LP, Las Vegas, NV 89130 (US)
(72) Inventor: PIENADO, Rene, E., San Francisco, CA 94115 (US); GRASLEY, Zachary, Charles, College Station, TX 77845 (US)
(74) Representative: Dehns
(86) International application number: PCT/US2019/025803
(87) International publication number: WO 2019/195557

(56) References cited:
- CN-A- 101 628 611
- CN-A- 106 626 073
- KR-A- 20160 056 468
- US-A- 5 885 478
- US-A1- 2011 289 901

## Description

### TECHNICAL FIELD

This disclosure relates generally to methods and systems for capturing carbon dioxide released during power generation. In some aspects, the disclosure relates to carbon dioxide capture during power generation for ready-mix concrete production and delivery.

### RELATED ART

Concrete is a building material used through the world for a multitude of construction projects such as bridges, tunnels, support walls, erosion barriers, trenches, retainment structures, commercial and residential structure, roads, underwater foundations, etc. It is a material made mainly from naturally occurring components such as aggregates, cement, and water. Conventionally, concrete is transported from a batching plant to a pour site using vehicle-mounted transit mixers. Like many other industrial processes, carbon dioxide (CO2) emissions invariably occur during the manufacture and transportation of ready-mix concrete.

CN 101628611 A discloses a self-propelled concrete mixing ship integrating the storage, metering, transportation, stirring and pumping of raw materials, such as aggregates, powder, water, admixture and the like.

US 2011/0289901 A1 discloses a process for sequestering carbon dioxide in fresh concrete from the exhaust emitted from the combustion of carbonaceous fuel in a concrete mixing truck. Exhaust from the engine is redirected after passing through environmental controls to the concrete mixing chamber on the concrete truck. Carbon dioxide in the exhaust physically mixes with the ingredients producing fresh concrete. CN 106626073 A discloses a mixer truck for concrete transport that has an exhaust pipe, a water tank, and a discharge pipe. One end of the discharge pipe is connected to the exhaust pipe and the other end of the exhaust pipe is immersed in the water tank below the water level. US 5,885,478 A discloses water having alkalies selected from sodium, potassium and mixtures thereof dissolved therein. The water is treated with a composition to reduce the concentration of the alkalies, whereby the water is rendered usable according to ASTM standards, to render the water usable as concrete mix water. The composition is selected from compounds in the group consisting of lithium carbonate, acid zirconium phosphate, carbon dioxide and mixtures thereof. KR 10-2016-0056468 A discloses a hospital ship having medical and incineration facilities. The hospital ship comprises a hull which is formed to float on the sea, a medical unit which is formed inside the hull and has a medical space for treating patients, an incineration unit which incinerates objects generated in the medical unit, and a gas treatment unit which treats the gas exhausted from the medical unit and the incineration unit.

The present disclosure addresses the need to capture CO2 emissions associated with the manufacture and delivery of ready-mix concrete as well as during other activities.

### SUMMARY OF THE DISCLOSURE

According to an aspect of the present invention there is provided a method of producing ready-mix concrete as claimed in claim 1.

According to another aspect of the present invention there is provided a system for producing and delivery of ready-mix concrete as claimed in claim 8.

### BRIEF DESCRIPTION OF THE FIGURES

**FIG. 1** illustrates one non-limiting embodiment of a facility that may use CO2 carbon capture methods as described in the present disclosure;
**FIG. 2** illustrates one non-limiting embodiment of a carbon capture method according to the present disclosure;
**FIG. 3** illustrates one non-limiting embodiment of a process that uses CO2 as a feed;
**FIG. 4** illustrates one non-limiting embodiment of a ready-mix concrete delivery system method according to the present disclosure;
**FIG. 5** illustrates another non-limiting embodiment of a ready-mix concrete delivery system method according to the present disclosure; and
**FIG. 6** illustrates one non-limiting embodiment of a facility according to the present disclosure that is adapted for use in delivering ready-mix concrete to a seabed.

### DETAILED DESCRIPTION OF THE DISCLOSURE

Generally, aspects of the present disclosure capture some or all of the carbon dioxide (CO2) emitted at a facility prior to or during power generation. For simplicity, the present disclosure is directed to a non-limiting example of power generation during operation of a ready-mix concrete production and delivery system. Illustrative operations include, but are not limited to, operating propulsion machinery, generators, turbines, pumps, processors, mixers, motors, etc. By "sequester" or "capture," it is meant that the CO2 is bound in a liquid or solid media that prevents the CO2 from entering the atmosphere for a long period of time, e.g., a hundred years or more. Illustrative carbon capture systems and associated facilities for producing ready-mix concrete are discussed below.

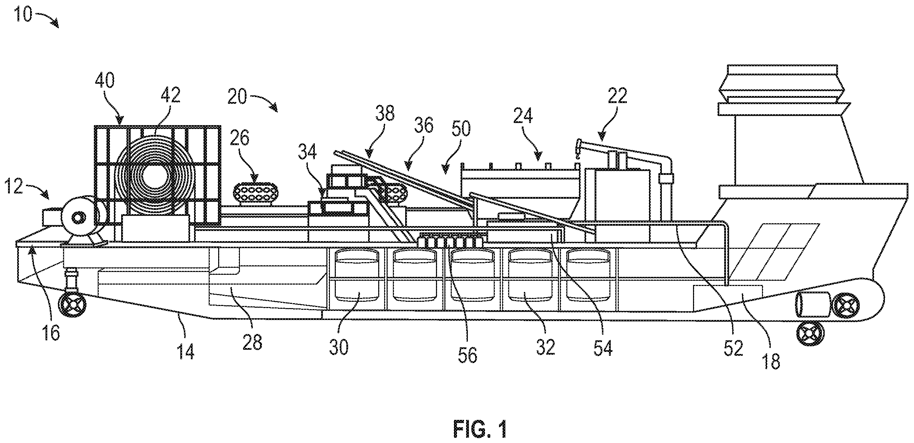

Referring to **Fig. 1****,** there is schematically illustrated a ready-mix concrete production facility **10** according to the present disclosure. The facility **10** is a water craft, or a waterborne facility as illustrated. The facility **10** may include a vessel **12** having a hull **14,** one or more decks **16,** and a power generation system **18.** The facility **10** also includes an integrated ready-mix concrete production system **20,** which is described in further detail below.

In one embodiment, the ready-mix concrete production system **20** may include one or more containers **22** for holding cement mix, one or more containers **24** for holding aggregate, one or more containers **26** for holding additives, one or more containers **28** for holding water, one or more containers **30** for holding waste water / process water, and one or more containers **32** for holding cement. These components are conveyed and processed by equipment such as pumps **34,** feeders / conveyors **36,** and mixers **38.** A ready-mix concrete delivery system **40** conveys the freshly made ready-mix to a desired pour point, which may be underwater (*e.g*., a seabed), a near-shore location, or a land location. The delivery system **40** may include a conduit **42,** which may be rigid pipe, or a flexible hose as shown. To capture CO2 emitted during operation of the facility **10,** a carbon capture system **50** may be integrated into the facility **10.** In one arrangement, the carbon capture system **50** may include one or more offtakes **52,** a CO2 capture / liquefaction unit **54,** and a CO2 storage / injection unit **56.**

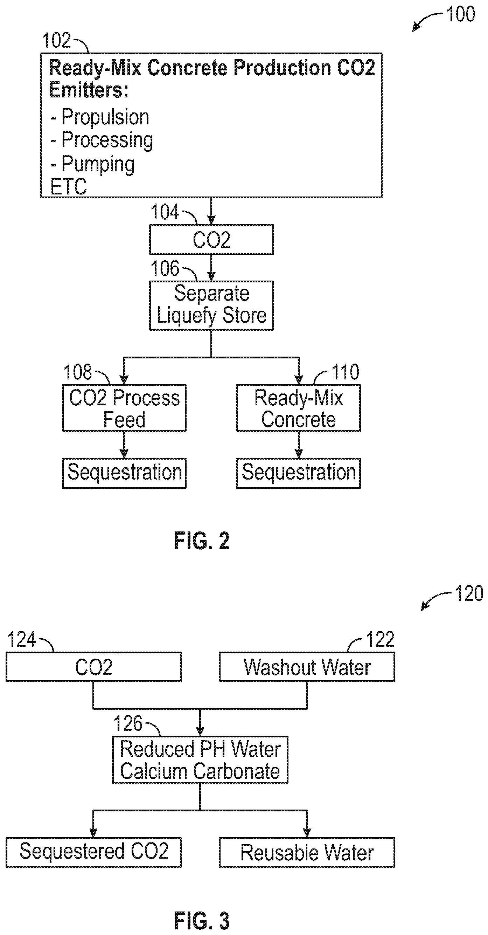

**Fig. 2** is a flow chart illustrating one non-limiting embodiment of a method **100** for sequestering CO2 generated by the facility **10** (**Fig. 1**). Referring to **Figs. 1** and **2****,** in one illustrative mode of operation, the facility **10** utilizes internal power generation that emits CO2 gases at step **102.** In one aspect, the power may be generated by burning hydrocarbon-based fuels. The power may be used to operate a propulsion system, pumps, and other onboard machinery described in connection with **Fig. 1****.**

At step **104,** the CO2 emissions are conveyed to the carbon capture system **50** using suitable flow paths, such as the offtake **52** from the power generation system **18.** The offtakes **52** may be ducts, tubes, pipes, hoses or other conduits for conveying gases. Similar offtakes (not shown) may be used to convey emissions from other machinery as well. It should be appreciated that the facility **10** uses a "closed" system wherein emissions that include CO2 are collected at the source of the emissions and directed via one or more fluid conduits to the CO2 capture / liquefaction unit **54.** In one mode of operation, the flow of emissions from the source may be continuous as long as the source is operating and generating emissions. By "closed" it is meant that there is a structural (*e.g*., a fluid conduit) and functional (*e.g*., fluid communication) interconnection between the emission source(s) and the CO2 capture / liquefaction unit **54.**

At step **106,** the carbon capture system **50** processes these emissions to separate and liquefy the CO2 component of the emissions using the CO2 capture / liquefaction unit **54.** The CO2 capture / liquefaction unit **54** separates the CO2 from the emissions. The separated CO2 may be compressed using suitable pumps to a liquid state. The liquefied CO2 may be stored in suitable tanks until needed. Additionally or alternatively, the liquefied CO2 may be used immediately without storage. Also, the CO2 may be stored and / or used in a gaseous state without an intermediate step of liquefaction.

The carbon capture system **50** sequesters the liquefied CO2 in at least one of two ways. For example, at step **108,** some or all of the liquefied CO2 gases may be used as a process feed to treat water used to wash surfaces lined with ready-mix cement ("washout water"). At step **110,** some or all of the liquefied CO2 gases are scrubbed, processed, cleaned, redirected and combustion gases are separated in order to capture and alienate C02 which is then contained in gaseous or liquid form, or routed for measured dosing into ready-mix concrete during the mixing process.

**Fig. 3** is a flow chart illustrating one non-limiting embodiment of a method **120** for using CO2 as a process feed for treating washout water. When concrete piping and equipment are washed with water, or feed water, the feed water will pick up particulate matter such as sand grains, but will also contain dissolved cement grains, which leads to a high concentration of calcium and silica ions in the water. The calcium ions become balanced by hydroxyl ions, which leads to the water having a high pH (*i.e.,* it becomes very "basic"), making it unsuitable for reuse as concrete mix water. This washout water is received by the carbon capture system **50** at step **122.**

At step **124,** the carbon capture system **50** receives the separated CO2, which may have been stored. At step **126,** the carbon capture system **50** injects the carbon dioxide into concrete washout water. The CO2 reacts with calcium ions in the washout water to precipitate calcium carbonate (that is, calcite or limestone). This serves two purposes: **1**) removal of calcium ions from the water reduces the pH closer to neutral, and **2**) small calcium carbonate particles could serve as seeding sites for stimulating cement hydration (*i*.*e*., the reaction of cement with water). Thus, concrete washout water may, after filtering out larger particles, be made suitable for reuse as concrete mixing water by mixing with CO2. Furthermore, CO2 that reacts with calcium ions to form calcite is essentially permanently bound and unable to be released into the atmosphere since calcite is a very stable mineral, particularly if it is bound in concrete.

It should be understood that the generated CO2 may also be used as a feed for other processes in addition to treating washout water. It should also be understood that the wash water may or may not be used for water in the concrete mixing process. That is, the calcium carbonate or limestone particles may be used for other non-concrete mixing purposes that serve to permanently sequester the **C02**.

Referring to **Fig. 1****,** it should be appreciated that the carbon capture system **50** may capture some or all of the CO2 emitted by the shipboard equipment and sequester the CO2 by either or both of using the CO2 to process concrete wash water and injecting the CO2 into the ready mix concrete. It should be appreciated that the carbon capture system **50** may capture and store CO2 separated from the emissions of the power generation system **18** even when ready-mix concrete is not being generated. For example, the power generation system **18** may supply power to a propulsion system that moves the facility **10** between two locations or operated to maintain a position on water while ready-mix concrete generation is interrupted. The CO2 from emissions created during such activity may still be captured by the carbon capture system **50** for use during subsequent ready-mix concrete generation.

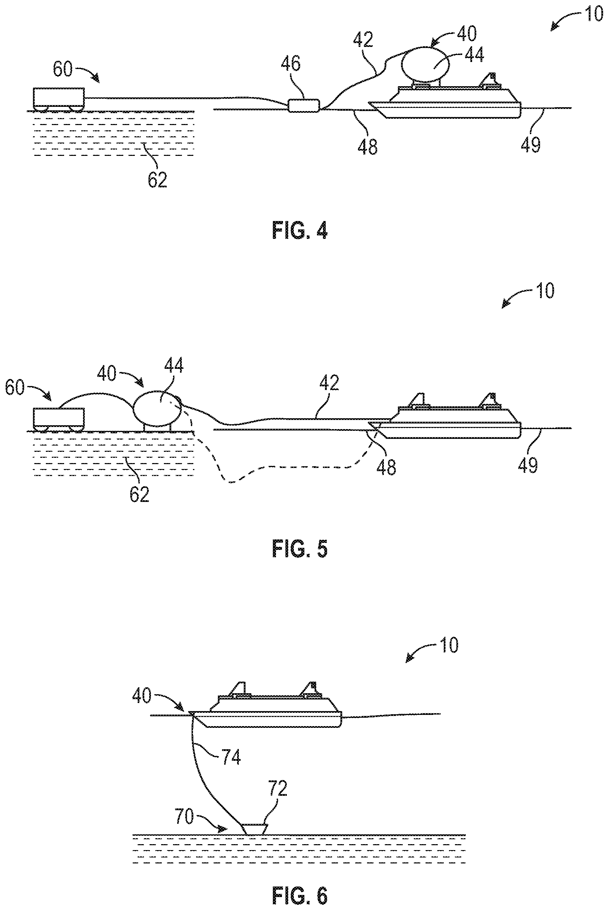

Referring to **Figs. 4-6****,** there are shown various embodiments of the facility **10** that may use the carbon capture techniques and systems of the present disclosure.

In **Fig. 4****,** the facility **10** is used convey ready-mix concrete to a pour point on land using a ready-mix concrete delivery system **40** that includes a flexible conduit **42** spooled on a reel **44.** The reel **44** is positioned at the facility **10.** One or more floatation devices **46** may be used to buoy at least a section of the flexible conduit **42** along a surface **48** of the water **49.** The conduit **42** may be partially or fully submerged in the water **49** fully above the surface **48.**

In **Fig. 5****,** the facility **10** is also used convey ready-mix concrete to a pour point **60** on land **62.** In this embodiment, the facility **10** includes a ready-mix concrete delivery system **40** having a flexible conduit **42** spooled on a reel **44** that is positioned at a location on land **62.** In this embodiment, a floatation device is not used to buoy the flexible conduit **42** on the water **49.** An alternate arrangement may allow the flexible conduit **42,** which is shown in hidden lines, to sink below the water's surface **48** or even lay on the sea floor. It should be noted that the arrangements of **Figs. 4** and **5** are interchangeable. That is, the deployment of flexible conduit **42** shown in **Fig. 5** may be used in the **Fig. 4** embodiment, and *vice versa.*

Referring to **Figs. 4** and **5****,** the pour point **60** may be the location for final use of the ready-mix concrete or a location where the ready-mix concrete exiting the conduit **42** is transferred to a secondary transport system. The secondary transport system may include vehicles and / or conduits such as hoses or pipes. Thus, the location for use of the ready-mix concrete may be remote, *e.g*., up to a kilometer or more from the pour point **60.** In some application, the pour point **60** may be on land **62** but the final use may be at an underwater location, such as a seabed or sea floor.

In **Fig. 6****,** the facility **10** is used convey ready-mix concrete to a pour point **70** at a subsea location **72.** The ready-mix concrete delivery system **40** includes a conduit **74** that extends from the facility **10.** The ready-mix concrete delivery system **40** may use a flexible pipe, reel, and flotation devices as described previously.

Additionally, it should be noted that the source of the CO2 does not necessarily have to be onboard the facility **10.** That is, in embodiments of the present disclosure, CO2 from a source external to the facility **10** may be transported to the facility **10** and sequestered into the ready-mix concrete manufactured by the facility **10.**

The conduit **42** referred to in **Figs. 1** and **4****-6** may be configured as needed for a particular set of operating conditions. The conduit **42** may be formed of mainly rubber or mainly a non-rubber. By mainly, it is meant more than 50%. Additionally, the conduit **42** may be formed of multiple concentric tubular layers. Each layer may have one or more different material properties. For example, the inner most layer that contacts ready-mix concrete may have a lower coefficient of friction and a hardness greater than one or more of the outer layers. Thus, the inner most layer may present less resistance to flow of the ready-mix concrete while providing greater wear resistance. The conduit **42** may be flexible and capable of being stored on a spool, but can alternatively be rigid and formed from telescoping or collapsing parts. The conduit may be a composite bonded pipe, such as the oil and gas downline sold by Airborne^{™}, SHAWCOR, or other comparable product, but can alternatively be a series of rigid sections hinged together, a reinforced rubber pipe, or any other suitable pipe. The conduit may be formed of metals, composites, non-metals, carbon fiber, and / or other materials.

The material making up the conduit **42** depends, in part, on the pressure at which the ready-mix concrete is pumped. For example, a mainly rubber conduit may be adequate for pumping pressure up to 50 bar. For operating pressures above 50 bar, the conduit **42** may be at least partially composed of materials have a burst strength greater than that of rubber. Of course, other factors such as the cross-sectional flow area and the length of the conduit **42** also are factors in determining appropriate material selection.

From the above, it should be appreciated that what has been described include methods of operating a ready-mix concrete production and delivery system. It should be noted that "delivery" as used in connection with the teachings of the present disclosure has two distinct aspects. First, the facility **10** may be moved as needed to shorten the distance between the location at which the ready-mix concrete is made and the location at which the ready-mix concrete is used. Second, the equipment onboard the facility **10** may be used to transport the freshly made-ready mix concrete from the facility **10** to the location at or near where the ready-mix concrete will be used. Thus, aspects of the present disclosure provide systems and related methods that may require less energy, such as from burning fossil fuels, in order to deliver ready-mix concrete.

From the above, it should be appreciated that what has been described includes, in part, a facility configured to manufacture and deliver ready-mix concrete. The facility may include an integrated carbon capture system and a fluid conduit configured to convey emissions from one or more emissions sources to the carbon capture system. Thereafter, the carbon capture system processes the emissions to generate a liquid and/or gas CO2 feed, which may be used immediately and /or stored for later use. The carbon capture system may be in fluid communication with the ready-mix concrete production system via suitable conduits and supply liquid and /or gas CO2 as needed. As noted above, the CO2 may be injected to the ready-mix concrete being produced or to treat the process water from such production. Thus, in one aspect, the facility uses a closed system wherein the carbon capture system is in fluid communication with one or more sources of CO2 emissions and also with one or more receivers of liquid and / or gas CO2. In certain embodiments, the CO2 emission source(s), the CO2 emissions processing equipment, storage, and injection equipment, and the end user(s) of the CO2 are co-located; *i.e.*, located on the same platform and are connected to one another using a fluid conduit network. The platform may be a mobile waterborne platform as illustrated. In other embodiments, the platform may be stationary, either on land or on the water.

Below are definitions for terms used in the present disclosure.

A watercraft refers to any marine vessel that is engineered and constructed to propel itself along a body of water, marine vessel that is engineered to float but does not have onboard equipment for self-propulsion (*i.e*., an unpowered watercraft), or any marine vessel engineered to be towed or otherwise moved along a body of water.

A waterborne facility refers to any watercraft or floating platform that is engineered and constructed to accommodate heavy equipment such as pumps, hydraulically powered spools, conveyance mechanisms and/or structures such as bins or containers.

The term "near coastal" refers to a region or zone extending inland from a shoreline. Depending on the geography and terrain, a near coastal location can be a few miles or a dozen miles or more from the shoreline.

The term "ready-mix" concrete refers to concrete that is specifically manufactured for delivery to the pour site in a freshly mixed and plastic or unhardened state. Ready-mix concrete may include components such as cement, water and aggregates comprising fine and coarse aggregate. The aggregate may make up at least 50% of a total volume of the ready-mix concrete. In aspects, the volume of aggregate may be 60-75% of a total volume of the ready-mix concrete.

Aggregates may be classified as fine and coarse. Fine aggregates may be defined as being composed of particles, such as natural sand or crushed stone, that have a size allowing passage through a 3/8-inch (0.95 cm) sieve. Coarse aggregates may be defined as being composed of particles that have a size greater than 0.19 inch (0.48 cm) in diameter. Conventionally, the size of coarse aggregates fall within the general range of 3/8 inches (0.95 cm) in diameter to 1.5 (3.81 cm) in diameter.

As a person skilled in the art will recognize from the previous detailed description and from the figures and claims, modifications and changes can be made to the embodiments of the invention without departing from the scope of this invention which is defined by the appended claims.

## Claims

1. A method of producing ready-mix concrete, comprising:
- positioning a facility (10) on a body of water (49), the facility (10) being configured to produce and deliver ready-mix concrete, wherein an emission that includes carbon dioxide (CO2) is generated during operation of the facility (10);
- producing the ready-mix concrete at the facility (10); **characterised by**:
- generating a process water by using a feed water during production of the ready-mix concrete, the process water including at least calcium and silica ions;
- separating the CO2 from the generated emission;
- liquefying the separated CO2 by compressing the CO2;
- adding at least a first portion of the separated CO2 to the process water; and
- adding at least a second portion of the separated CO2 to the ready-mix concrete produced at the facility (10).

2. The method of claim 1, further comprising moving the facility (10) along the body of water (49); and wherein:
- the emission includes a first emission generated by at least a first emission source while moving the facility (10) and a second emission generated by at least a second emission source while producing the ready-mix concrete;
- the step of separating the CO2 from the generated emission includes separating the CO2 from the first emission while the facility (10) is moving; and
- the step of liquefying the separated CO2 by compressing the CO2 includes liquefying the CO2 from the first emission while the facility (10) is moving; and
wherein:
- the ready-mix concrete is produced by a ready-mix concrete production system (20); and
- the steps of separating the CO2 from the generated emission, liquefying the separated CO2, adding the at least first portion of the separated CO2 to the process water, and adding the at least second portion of the separated CO2 to the ready-mix concrete is done by a carbon capture system (50); and
further comprising:
connecting the carbon capture system (50) to the at least a first emission source and the at least a second emission source using a first fluid conduit (52); and
connecting the carbon capture system (50) to the ready-mix concrete production system (20) using a second fluid conduit (52).

3. The method of claim 1, wherein the process water also includes at least cement grains.

4. The method of claim 1, wherein the liquefied CO2 is stored in one or more containers (56) before being added to the process water and to the produced ready-mix concrete.

5. The method of claim 1, wherein at least one emission source generates the emission, wherein the at least one emission source is one of: (i) a propulsion system configured to move the facility (10), and (ii) a ready-mix concrete production system (20) configured to produce the ready-mix concrete.

6. The method of claim 1, further comprising delivering the ready-mix concrete to a pour site (60) that is on land (62).

7. The method of claim 1, further comprising delivering the ready-mix concrete to a pour site (70) that is underwater.

8. A system for producing and delivery of ready-mix concrete, comprising:
a facility (10) configured to be positioned on a body of water (49), wherein an emission that includes carbon dioxide (CO2) is generated during operation of the facility (10);
a ready-mix concrete production system (20) disposed on the facility (10) and configured to produce the ready-mix concrete, **characterised by** the ready-mix concrete production system (20) configured to generate a process water by using a feed water during production of the ready-mix concrete, the process water including at least calcium and silica ions;
a ready-mix concrete delivery system (40) configured to deliver the produced ready-mix concrete to a selected pour site (60; 70); and
a carbon capture system (50) disposed on the facility (10), the carbon capture system (50) including:
- at least one offtake (52) configured to receive the emission,
- a carbon capture / liquefaction unit (54) configured to separate the CO2 from the received emission and liquefy the separated CO2, and
- at least one container (56) configured to store the separated CO2, the carbon capture system (50) being configured to add at least a portion of the stored CO2 to the process water, and add at least a portion of the stored CO2 to the ready-mix concrete produced at the facility (10).

9. The system of claim 8, wherein the facility (10) includes at least one emission source, and further comprising:
- a first fluid conduit (52) connecting the at least one emission source to the carbon capture system (50); and
- a second fluid conduit (52) connecting the carbon capture system (50) to the ready-mix concrete production system (20).

10. The system of claim 8, wherein the pour site (60) is on land (62).

11. The system of claim 8, wherein the pour site (70) is underwater.

12. The system of claim 8, wherein the ready-mix concrete delivery system (40) includes a conduit (42; 74) that extends from the facility (10).

13. The system of claim 12, wherein the conduit (42) is a flexible hose wound on a reel (44).

## Patentansprüche

1. Verfahren zur Herstellung von Fertigbeton, umfassend:
- Positionieren einer Anlage (10) auf einem Gewässer (49), wobei die Anlage (10) dazu ausgelegt ist, Fertigbeton herzustellen und zu liefern, wobei beim Betrieb der Anlage (10) eine Emission erzeugt wird, die Kohlendioxid (CO2) beinhaltet;
- Herstellen des Fertigbetons in der Anlage (10); **gekennzeichnet durch**:
- Erzeugen eines Prozesswassers durch Verwendung eines Speisewassers bei der Herstellung des Fertigbetons, wobei das Prozesswasser mindestens Calcium und Siliciumdioxid-Ionen beinhaltet;
- Abtrennen des CO2 von der erzeugten Emission;
- Verflüssigen des abgetrennten CO2 durch Komprimieren des CO2;
- Zugeben mindestens eines ersten Teils des abgetrennten CO2 zum Prozesswasser; und
- Zugeben mindestens eines zweiten Teils des abgetrennten CO2 zu dem in der Anlage (10) hergestellten Fertigbeton.

2. Verfahren nach Anspruch 1, das weiter das Bewegen der Anlage (10) entlang des Gewässers (49) umfasst; und wobei:
- die Emission eine erste Emission beinhaltet, die von mindestens einer ersten Emissionsquelle erzeugt wird, während die Anlage (10) bewegt wird, und eine zweite Emission, die von mindestens einer zweiten Emissionsquelle erzeugt wird, während der Fertigbeton hergestellt wird;
- der Schritt des Abtrennens des CO2 von der erzeugten Emission das Abtrennen des CO2 von der ersten Emission beinhaltet, während sich die Anlage (10) bewegt; und
- der Schritt des Verflüssigens des abgetrennten CO2 durch Komprimieren des CO2 das Verflüssigen des CO2 aus der ersten Emission beinhaltet, während sich die Anlage (10) bewegt; und
wobei:
- der Fertigbeton von einem Fertigbeton-Herstellungssystem (20) hergestellt wird; und
- die Schritte des Abtrennens des CO2 von der erzeugten Emission, Verflüssigens des abgetrennten CO2, Zugebens des mindestens ersten Teils des abgetrennten CO2 zum Prozesswasser, und Zugebens des mindestens zweiten Teils des abgetrennten CO2 zum Fertigbeton durch ein Kohlenstoffbindesystem (50) vorgenommen wird; und
weiter umfassend:
Verbinden des Kohlenstoffbindesystems (50) mit der mindestens einen ersten Emissionsquelle und der mindestens einen zweiten Emissionsquelle unter Verwendung einer ersten Fluidleitung (52); und
Verbinden des Kohlenstoffbindesystems (50) mit dem Fertigbeton-Herstellungssystem (20) unter Verwendung einer zweiten Fluidleitung (52).

3. Verfahren nach Anspruch 1, wobei das Prozesswasser ebenfalls mindestens Zementkörner beinhaltet.

4. Verfahren nach Anspruch 1, wobei das verflüssigte CO2 in einem oder mehreren Behältern (56) gespeichert wird, bevor es dem Prozesswasser und dem hergestellten Fertigbeton zugegeben wird.

5. Verfahren nach Anspruch 1, wobei mindestens eine Emissionsquelle die Emission erzeugt, wobei es sich bei der mindestens einen Emissionsquelle um eines handelt aus: (i) einem Antriebssystem, das dazu ausgelegt ist, die Anlage (10) zu bewegen, und (ii) einem Fertigbeton-Herstellungssystem (20), das dazu ausgelegt ist, den Fertigbeton herzustellen.

6. Verfahren nach Anspruch 1, das weiter das Liefern des Fertigbetons zu einer Einbaustelle (60) umfasst, die an Land (62) liegt.

7. Verfahren nach Anspruch 1, das weiter das Liefern des Fertigbetons zu einer Einbaustelle (70) umfasst, die unter Wasser liegt.

8. System zur Herstellung und Lieferung von Fertigbeton, umfassend:
eine Anlage (10), die dazu ausgelegt ist, auf einem Gewässer (49) positioniert zu werden, wobei beim Betrieb der Anlage (10) eine Emission erzeugt wird, die Kohlendioxid (CO2) beinhaltet;
ein Fertigbeton-Herstellungssystem (20), das auf der Anlage (10) angeordnet und dazu ausgelegt ist, den Fertigbeton herzustellen, **dadurch gekennzeichnet, dass** das Fertigbeton-Herstellungssystem (20) dazu ausgelegt ist, durch Verwendung eines Speisewassers bei der Herstellung des Fertigbetons ein Prozesswasser zu erzeugen, wobei das Prozesswasser mindestens Calcium und Siliciumdioxid-Ionen beinhaltet;
ein Fertigbeton-Liefersystem (40), das dazu ausgelegt ist, den hergestellten Fertigbeton zu einer ausgewählten Einbaustelle (60; 70) zu liefern; und
ein Kohlenstoffbindesystem (50), das in der Anlage (10) angeordnet ist, wobei das Kohlenstoffbindesystem (50) beinhaltet:
- mindestens einen Abzug (52), der dazu ausgelegt ist, die Emission aufzunehmen,
- eine Kohlenstoffbinde-/-verflüssigungseinheit (54), die dazu ausgelegt ist, das CO2 von der aufgenommenen Emission abzutrennen und das abgetrennte CO2 zu verflüssigen, und
- mindestens einen Behälter (56), der dazu ausgelegt ist, das abgetrennte CO2 zu speichern, wobei das Kohlenstoffbindesystem (50) dazu ausgelegt ist, mindestens einen Teil des gespeicherten CO2 dem Prozesswasser zuzugeben, und mindestens einen Teil des gespeicherten CO2 dem in der Anlage (10) hergestellten Fertigbeton zuzugeben.

9. System nach Anspruch 8, wobei die Anlage (10) mindestens eine Emissionsquelle beinhaltet, und weiter umfassend:
- eine erste Fluidleitung (52), die die mindestens eine Emissionsquelle mit dem Kohlenstoffbindesystem (50) verbindet; und
- eine zweite Fluidleitung (52), die das Kohlenstoffbindesystem (50) mit dem Fertigbeton-Herstellungssystem (20) verbindet.

10. System nach Anspruch 8, wobei die Einbaustelle (60) an Land (62) liegt.

11. System nach Anspruch 8, wobei die Einbaustelle (70) unter Wasser liegt.

12. System nach Anspruch 8, wobei das Fertigbeton-Liefersystem (40) eine Leitung (42; 74) beinhaltet, die sich von der Anlage (10) erstreckt.

13. System nach Anspruch 12, wobei es sich bei der Leitung (42) um einen flexiblen Schlauch handelt, der auf eine Haspel (44) gewickelt ist.

## Revendications

1. Procédé de production de béton prêt à l'emploi, comprenant :
- un positionnement d'une installation (10) sur une masse d'eau (49), l'installation (10) étant configurée pour produire et délivrer du béton prêt à l'emploi, dans lequel une émission qui inclut du dioxyde de carbone (CO2) est générée durant un fonctionnement de l'installation (10) ;
- une production du béton prêt à l'emploi au niveau de l'installation (10) ; **caractérisé par** :
- une génération d'une eau de fabrication en utilisant une eau d'alimentation durant la production du béton prêt à l'emploi, l'eau de fabrication incluant au moins des ions de calcium et de silice ;
- une séparation du CO2 de l'émission générée ;
- une liquéfaction du CO2 séparé en comprimant le CO2 ;
- un ajout d'au moins une première partie du CO2 séparé à l'eau de fabrication ; et
- un ajout d'au moins une seconde partie du CO2 séparé au béton prêt à l'emploi produit au niveau de l'installation (10).

2. Procédé selon la revendication 1, comprenant en outre un déplacement de l'installation (10) le long de la masse d'eau (49) ; et dans lequel :
- l'émission inclut une première émission générée par au moins une première source d'émission tout en déplaçant l'installation (10) et une seconde émission générée par au moins une seconde source d'émission tout en produisant le béton prêt à l'emploi ;
- l'étape de séparation du CO2 de l'émission générée inclut une séparation du CO2 de la première émission tandis que l'installation (10) se déplace ; et
- l'étape de liquéfaction du CO2 séparé en comprimant le CO2 inclut une liquéfaction du CO2 provenant de la première émission tandis que l'installation (10) se déplace ; et
dans lequel :
- le béton prêt à l'emploi est produit par un système de production de béton prêt à l'emploi (20) ; et
- les étapes de séparation du CO2 de l'émission générée, liquéfaction du CO2 séparé, ajout de la au moins une première partie du CO2 séparé à l'eau de fabrication, et ajout de la au moins une seconde partie du CO2 séparé au béton prêt à l'emploi est faite par un système de capture de carbone (50) ; et
comprenant en outre :
une liaison du système de capture de carbone (50) à la au moins une première source d'émission et la au moins une seconde source d'émission en utilisant un premier conduit de fluide (52) ; et
une liaison du système de capture de carbone (50) au système de production de béton prêt à l'emploi (20) en utilisant un second conduit de fluide (52).

3. Procédé selon la revendication 1, dans lequel l'eau de fabrication inclut également au moins des grains de ciment.

4. Procédé selon la revendication 1, dans lequel le CO2 liquéfié est stocké dans un ou plusieurs conteneurs (56) avant d'être ajouté à l'eau de fabrication et au béton prêt à l'emploi produit.

5. Procédé selon la revendication 1, dans lequel au moins une source d'émission génère l'émission, dans lequel la au moins une source d'émission est un de : (i) un système de propulsion configuré pour déplacer l'installation (10), et (ii) un système de production de béton prêt à l'emploi (20) configuré pour produire le béton prêt à l'emploi.

6. Procédé selon la revendication 1, comprenant en outre une délivrance du béton prêt à l'emploi à un site de coulée (60) qui est à terre (62).

7. Procédé selon la revendication 1, comprenant en outre une délivrance du béton prêt à l'emploi à un site de coulée (70) qui est sous l'eau.

8. Système de production et de délivrance de béton prêt à l'emploi, comprenant :
une installation (10) configurée pour être positionnée sur une masse d'eau (49), dans lequel une émission qui inclut du dioxyde de carbone (CO2) est générée durant un fonctionnement de l'installation (10) ;
un système de production de béton prêt à l'emploi (20) disposé sur l'installation (10) et configuré pour produire le béton prêt à l'emploi, **caractérisé par** le système de production de béton prêt à l'emploi (20) configuré pour générer une eau de fabrication en utilisant une eau d'alimentation durant la production du béton prêt à l'emploi, l'eau de fabrication incluant au moins des ions de calcium et de silice ;
un système de délivrance de béton prêt à l'emploi (40) configuré pour délivrer le béton prêt à l'emploi produit à un site de coulée sélectionné (60 ; 70) ; et
un système de capture de carbone (50) disposé sur l'installation (10), le système de capture de carbone (50) incluant :
- au moins un canal d'évacuation (52) configuré pour recevoir l'émission,
- une unité de capture/liquéfaction de carbone (54) configurée pour séparer le CO2 de l'émission reçue et liquéfier le CO2 séparé, et
- au moins un conteneur (56) configuré pour stocker le CO2 séparé, le système de capture de carbone (50) étant configuré pour ajouter au moins une partie du CO2 stocké à l'eau de fabrication, et ajouter au moins une partie du CO2 stocké au béton prêt à l'emploi produit au niveau de l'installation (10).

9. Système selon la revendication 8, dans lequel l'installation (10) inclut au moins une source d'émission, et comprenant en outre :
- un premier conduit de fluide (52) reliant la au moins une source d'émission au système de capture de carbone (50) ; et
- un second conduit de fluide (52) reliant le système de capture de carbone (50) au système de production de béton prêt à l'emploi (20).

10. Système selon la revendication 8, dans lequel le site de coulée (60) est à terre (62).

11. Système selon la revendication 8, dans lequel le site de coulée (70) est sous l'eau.

12. Système selon la revendication 8, dans lequel le système de délivrance de béton prêt à l'emploi (40) inclut un conduit (42 ; 74) qui s'étend à partir de l'installation (10).

13. Système selon la revendication 12, dans lequel le conduit (42) est un tuyau flexible enroulé sur une bobine (44).
